# EUROPÄISCHE PATENTANMELDUNG

(11) **EP 1 415 932 A2**
(43) Veröffentlichungstag der Anmeldung: **06.05.2004**
(21) Anmeldenummer: 03025113.6
(22) Anmeldetag: 29.09.2000
(51) Int. Cl.: B65D 65/14, B65D 65/40

(54) **Kunststoffolie**

(30) Priorität: 07.10.1999 DE 19948286; 05.05.2000 DE 10021687
(62) Teilanmeldung aus: 00971306.6
(71) Anmelder: Huhtamaki Ronsberg Zweigniederlassung der Huhtamaki Deutschland GmbH & Co. KG., 87671 Ronsberg/Allgäu (DE)
(72) Erfinder: Battegazzore, Rinaldo, Dr., 15058 Viauzzolo (IT); Hertlein, Jochen, Dr., 61118 Bad Vilbel (DE)
(74) Vertreter: Hutzelmann, Gerhard

(57) **Zusammenfassung**

Kunststoffolie(1,41), insbesondere zum Verpacken von vorzugsweise würfelförmigen Produkten, wie z.B. Suppenwürfeln, wobei die Kunststoffolie (1,41) aus einer Polyolefinfolie, vorzugsweise PE oder PP besteht und die Kunststoffolie wenigstens einseitig mit einer Klebeschicht aus einer druckempfindlichen Klebesubstanz(2,42) versehen ist.

## Beschreibung

Die Erfindung bezieht sich auf eine Kunststoffolie, insbesondere zum Verpacken von vorzugsweise würfelförmigen Produkten, wie z.B. Suppenwürfeln, wobei die Kunststoffolie aus einer Polyolefinfolie, vorzugsweise PE oder PP besteht.

Aus EP-A-0 870 695 ist eine derartige Kunststoffolie bekannt.

Darüber hinaus beschreibt EP-A-0 891 930 eine ähnliche Kunststoffolie.

Für derartige Zwecke wurden bisher meist Aluminium-Papier-Verbunde verwendet, was sowohl in der Herstellung als auch beim Recycling schwierig zu handhaben ist.

Der Erfindung liegt die Aufgabe zugrunde, eine Kunststoffolie aufzuzeigen, die für derartige Einsatzzwecke sehr gut geeignet ist.

Diese Aufgabe wird erfindungsgemäß dadurch gelöst, daß die Kunststoffolie wenigstens einseitig mit einer Klebeschicht versehen ist, und daß als Klebeschicht eine druckempfindliche Klebesubstanz vorgesehen ist.

Damit wird durch einfaches Auffalten und Zusammendrücken eine zuverlässig verschlossene Verpackung geschaffen.

Eine vorteilhafte weitere Ausgestaltung der Erfindung liegt darin, daß die Kunststoffolie aus OPP oder OPE besteht.

Kunststoffolien aus beiden Materialien lassen sich besonders gut falten.

Als sehr vorteilhaft hat es sich dabei ergeben, wenn gemäß einer weiteren Ausgestaltung der Erfindung die Kunststoffolie eine Dicke von 10 bis 100µm aufweist.

Kunststoffolien in diesem Dickenbereich haben sich als besonders günstig erwiesen.

Eine weitere vorteilhafte Ausgestaltung der Erfindung ist dadurch gekennzeichnet, daß die Kunststoffolie wenigstens einseitig metallisiert ist.

Als besonders vorteilhaft hat es sich dabei ergeben, wenn erfindungsgemäß die Außenseite der Kunststoffolie mit der Klebeschicht versehen ist.

Dabei hat es sich als besonders günstig herausgestellt, wenn gemäß einer weiteren Ausgestaltung der Erfindung wenigstens die auf der Außenseite der Kunststoffolie vorgesehene Klebschicht faconartig angeordnet ist.

Damit liegt diese Klebeschicht nur dort vor, wo sie auch gebraucht wird.

Ebenfalls sehr günstig ist es, wenn auf der Kunststoffolie ein Farbauftrag vorgesehen ist.

Dieser Farbauftrag kann gemäß einer weiteren Ausgestaltung der Erfindung mit einem Abdecklack versehen sein.

Dadurch ist die Farbe zusätzlich geschützt.

Besonders günstig ist es dabei, wenn gemäß einer weiteren Ausgestaltung der Erfindung der Abdecklack im Druckverfahren aufgebracht ist.

Der Abdecklack kann gemäß einer weiteren Ausgestaltung der Erfindung in einer Stärke von 0.1 bis 10.0 g/m² aufgetragen sein.

In der Zeichnung ist die Erfindung anhand von zwei Ausführungsbeispielen veranschaulicht. Dabei zeigen:
- Fig. 1: einen Schnitt durch eine Kunststoffolie,
- Fig.2: einen schlauchförmigen Abschnitt der Kunststoffolie,
- Fig.3: einen Suppenwürfel mit der Folie gemäß Fig. 1 oder 2 eingeschlagen,
- Fig.4: einen Schnitt durch eine weitere Kunststoffolie,
- Fig.5: einen schlauchförmigen Abschnitt aus der Kunststoffolie gemäß Fig.4 und
- Fig.6: einen Suppenwürfel in die Folie gemäß Fig. 4 und 5 eingeschlagen.

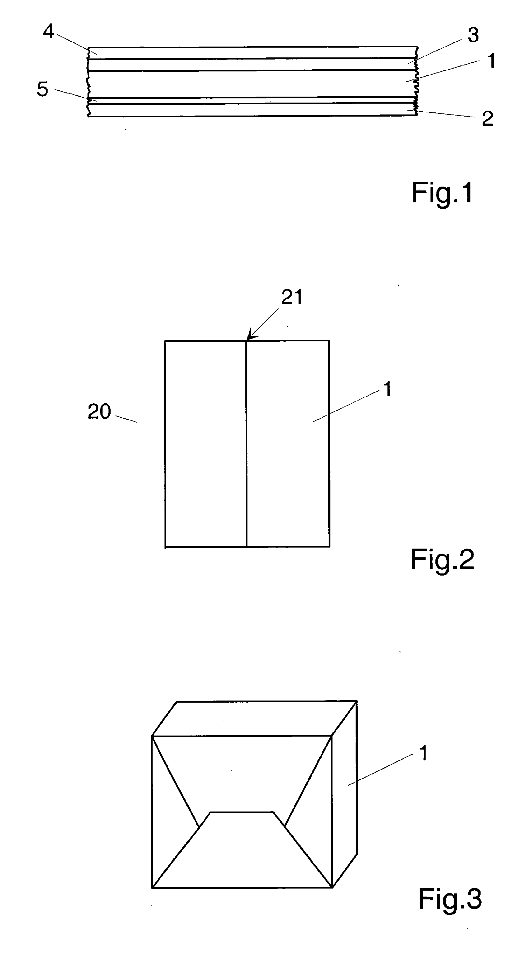

Mit 1 ist in Fig. 1 eine Kunststoffolie bezeichnet, die aus OPE hergestellt ist. Auf der einen Seite ist diese OPE-Folie 1 mit einem Heißsiegellack 2 beschichtet, während die andere Seite einen Farbdruck 3 aufweist.

Dieser Farbdruck 3 ist zusätzlich mit einem Überdrucklack 4 versehen.

Einseitig ist die Kunststoffolie 1 noch metallisiert (Schicht 5).

Ein Abschnitt dieser Kunststoffolie 1 ist entlang einer Längsnaht 21 zu einem Schlauch 20 geformt. Zum Bilden einer Suppenwürfelverpackung, wie sie in Fig.3 dargestellt ist, wird zuerst das eine Ende des Schlauches 20 eingefaltet und daraufhin das Füllgut eingebracht. Danach wird das andere Ende des Schlauchabschnittes der Kunststoffolie 1 ebenfalls eingefaltet. Aufgrund der guten Faltbarkeit der Kunststoffolie legen sich die eingefalteten Zwickelecken sehr eng an, so daß auch ohne zusätzliches Ansiegeln eine dichte Verpackung erzielt wird.

Anstelle der schlauchförmigen Verpackung kann beim Vorliegen eines blockförmigen Füllgutes dieses mittels eines planliegenden Folien-Abschnittes eingeschlagen werden.

Für besonders empfindliche Füllgüter ist es bei beiden Ausgestaltungen möglich, die einzelnen eingefalteten End-Abschnitte miteinander zu versiegeln.

Anstelle von OPE kann auch OPP oder PP als Material für die Kunststoffolie verwendet werden. Die Dicke der Folie liegt bei etwa 50 µm, kann aber entsprechend den Anforderungen zwischen 10 und 100 µm variieren.

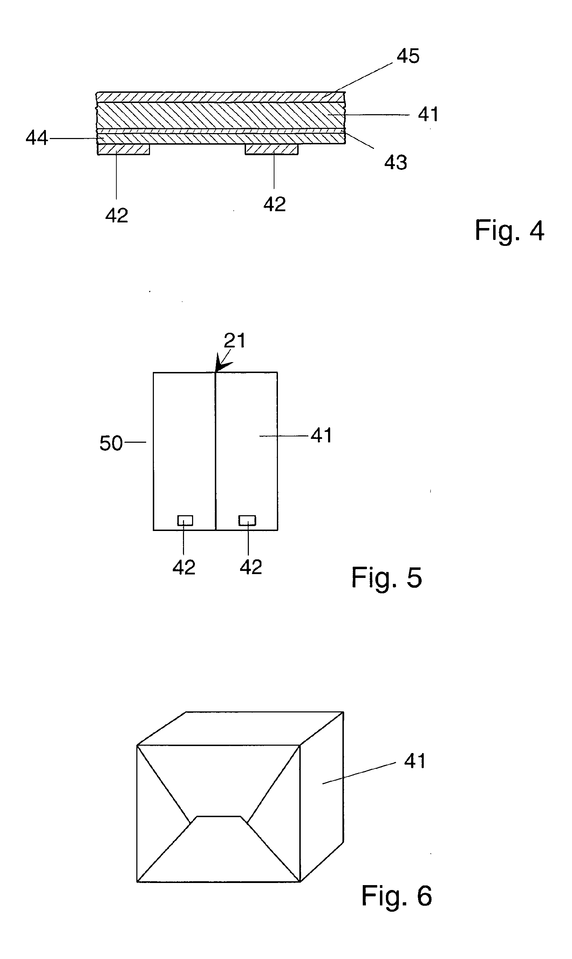

Beim Ausführungsbeispiel nach Fig.4 ist mit 41 eine weitere Kunststoffolie bezeichnet, die aus OPE hergestellt ist. Auf der einen Seite ist diese OPE-Folie 41 mit einer druckempfindlichen Klebesubstanz 42 beschichtet. Unter dieser Klebesubstanz ist ein Farbdruck 43 vorgesehen, der zusätzlich mit einem Überdrucklack 44 versehen ist.

Die Klebesubstanz kann dabei faconartig aufgetragen sein, was sowohl auf der Innenals auch auf der Außenseite sinnvoll ist.

Zusätzlich oder anstelle des Farbdruckes 43 kann die Kunststoffolie 41 noch einseitig metallisiert (Schicht 45) werden.

Ein Abschnitt dieser Kunststoffolie 41 wird entsprechend dem vorhergehenden Ausführungsbeispiel entlang einer Längsnaht 21 zu einem Schlauch 50 geformt. Zum Bilden einer Suppenwürfelverpackung, wie sie in Fig.5 dargestellt ist, wird zuerst das eine Ende des Schlauches 50 eingefaltet und daraufhin das Füllgut eingebracht. Danach wird das andere Ende des Schlauchabschnittes der Kunststoffolie 41 ebenfalls eingefaltet. Aufgrund der guten Faltbarkeit der Kunststoffolie legen sich die eingefalteten Zwickelecken sehr eng an. Zusätzlich werden die Zwickelecken noch mit Hilfe der Klebeschicht an der Außenseite der Verpackung angeklebt. Bei entsprechender Beschichtung ist auch ein Ansiegeln möglich.

Anstelle der schlauchförmigen Verpackung kann beim Vorliegen eines blockförmigen Füllgutes dieses mittels eines planliegenden Folien-Abschnittes eingeschlagen werden.

Anstelle von OPE kann auch OPP oder PP als Material für die Kunststoffolie verwendet werden. Die Dicke der Folie liegt bei etwa 50 µm, kann aber entsprechend den Anforderungen zwischen 10 und 100 µm variieren.

## Patentansprüche

1. Kunststoffolie(1,41), insbesondere zum Verpacken von vorzugsweise würfelförmigen Produkten, wie z.B. Suppenwürfeln, wobei die Kunststoffolie (1,41) aus einer Polyolefinfolie, vorzugsweise PE oder PP besteht, **dadurch gekennzeichnet, daß** die Kunststoffolie(1,41) wenigstens einseitig mit einer Klebeschicht(2,42) versehen ist, und daß als Klebeschicht eine druckempfindliche Klebesubstanz(2,42) vorgesehen ist.

2. Kunststoffolie nach Anspruch 1, **dadurch gekennzeichnet, daß** die Kunststoffolie(1,41) aus OPP oder OPE besteht.

3. Kunststoffolie nach Anspruch 1 oder 2, **dadurch gekennzeichnet, daß** die Kunststoffolie(1,41) eine Dicke von 10 bis 100 µm aufweist.

4. Kunststoffolie nach Anspruch 1, 2 oder 3, **dadurch gekennzeichnet, daß** die Kunststoffolie(1,41) wenigstens einseitig metallisiert ist.

5. Kunststoffolie nach Anspruch 1, 2, 3 oder 4, **dadurch gekennzeichnet, daß** die Außenseite der Kunststoffolie mit der Klebeschicht(2,42) versehen ist.

6. Kunststoffolie nach einem der vorhergehenden Ansprüche, **dadurch gekennzeichnet, daß** wenigstens die auf der Außenseite der Kunststoffolie vorgesehene Klebeschicht(2,42) faconartig angeordnet ist.

7. Kunststoffolie nach einem der vorhergehenden Ansprüche, **dadurch gekennzeichnet, daß** ein Farbauftrag(3,43) vorgesehen ist.

8. Kunststoffolie nach Anspruch 7, **dadurch gekennzeichnet, daß** der Farbauftrag (3,43) mit einem Abdecklack(4,44) versehen ist.

9. Kunststoffolie nach Anspruch 8, **dadurch gekennzeichnet, daß** der Abdecklack (4,44) im Druckverfahren aufgebracht ist.

10. Kunststoffolie nach Anspruch 8 oder 9, **dadurch gekennzeichnet, daß** der Abdecklack(4,44) in einer Stärke von 0.1 bis 10.0 g/m² aufgetragen ist.
